# EUROPÄISCHE PATENTANMELDUNG

(11) **EP 2 327 314 A1**
(43) Veröffentlichungstag der Anmeldung: **01.06.2011**
(21) Anmeldenummer: 09014838.8
(22) Anmeldetag: 30.11.2009
(51) Int. Cl.: A23L 1/22

(54) **Verfahren zur Herstellung eines Nahrungsergänzungsproduktes, sowie Nahrungsergänzungsprodukt selbst**

(71) Anmelder: Matt, Hans, 5971 LE Grubbenvorst (NL)
(72) Erfinder: Matt, Hans, 5971 LE Grubbenvorst (NL)
(74) Vertreter: Schmidt, Karl Michael

(57) **Zusammenfassung**

Die Erfindung betrifft ein Verfahren zur Herstellung eines diätetischen Lebensmittelergänzungsproduktes, sowie eines Lebensmittelergänzungsproduktes selbst, gemäß Oberbegriff der Patentansprüche 1 und 10. Um hierbei zu erreichen, dass zum Einen das Nahrungsergänzungsmittel als solches optimal verstoffwechselt wird, und zum Anderen die Nahrungsergänzungsstoffe auf das benötigte Maß dosierbar sind, ist erfindungsgemäß vorgeschlagen, dass die Stoffe oder Wirkstoffe oder die Wirkstoffmixtur in einem Solventen gelöst oder dispergiert und mit Nanopartikeln vermischt werden und, dass das Gemisch nach Auftrocknung wieder pulverfein gemahlen wird.

## Beschreibung

Die Erfindung betrifft ein Verfahren zur Herstellung eines Nahrungsergänzungsproduktes, sowie ein Nahrungsergänzungsprodukt selbst, sowie eine entsprechende Verwendung, gemäß Obergriff der Patentansprüche 1, 10 und 15.

Nahrungsergänzungsprodukte sind in vielfacher Form bekannt. Diese werden zur Ergänzung der Nahrung mit Mixturen aus Eiweißen, Fetten oder Fettsäuren, Vitaminen und / oder Ballaststoffen angeboten. Sie dienen, gemäß der gattungsbegrifflichen Bezeichnung der Ergänzung der normalen Nahrung, wenn auf Grund von bestimmten Belastungen, Tätigkeiten und körperlichen Anforderungen diese Stoffe oder Wirkstoffe nicht ausreichend in der normalen Nahrung vorliegen. Somit sind diese bekannten Nahrungsergänzungsprodukte für bestimmte Personenkreise die gewünschte und damit wörtlich zu nehmende Ergänzung ihrer natürlich aufgenommenen Nahrung. Die hier gemeinten und dargelegten Nahrungsergänzungsprodukte sind somit Nahrungsergänzungen im wörtlichen Sinne und keine pharmazeutischen Präparate, die einer spezifischen therapeutischen Wirkung unterliegen. Diese Begriffsbestimmung ist wichtig zur Darlegung des richtigen Gattungsbegriffes der vorliegenden Erfindung.

Die Aufnahme der Nahrung als solche, dass heißt letztendlich der gesamte Nahrungsaufnahmeverlauf soll empfohlenermaßen so verlaufen, dass möglichst alle aufgenommenen Nährstoffe auch vom Körper verwertet werden können. Betrachtet man hierbei die komplette Nahrungsaufnahme, so werden die natürlichen physiologisch Mechanismen vom Kauen und Zerkleinern der Nahrung, über die ausreichende Einspeichelung, und auch die nachfolgende Verdauung wesentlich bestimmt.

Für die optimale Aufnahme der Nahrung kommt den bei der Zubereitung der Speisen verwendeten Gewürze eine nicht unbedeutsame Rolle zu. Diese gewürzmäßigen Nahrungsmittel dienen oftmals nicht nur der geschmacklichen Aufwertung der Nahrung, sondern auch der guten physiologischen Verstoffwechselung.

Für die Verwendung von Nahrungsergänzungen für bestimmte Berufsgruppen, beispielsweise für Sportler, stellt genau diese möglichst optimale physiologische Verstoffwechselung der natürlich aufgenommenen Nahrung ein wesentlicher Parameter im Muskelaufbautraining dar.

Der Erfindung liegt somit die Aufgabe zugrunde, ein Verfahren zur Herstellung eines Nahrungsergänzungsproduktes sowie ein Nahrungsergänzungsproduktes selbst dahingehend weiter zu entwickeln, dass zum Einen das Nahrungsergänzungsmittel als solches optimal verstoffwechselt wird, und zum Anderen die Nahrungsergänzungsstoffe auf das benötigte Maß dosierbar sind.

Die gestellte Aufgabe ist bei einem Verfahren der gattungsgemäßen Art erfindungsgemäß durch die Kennzeichnungsmerkmale des Patentanspruches 1 gelöst.

Weitere vorteilhafte Ausgestaltung des Verfahrens sind in den Ansprüchen 1 ― 9 angegeben.

Im Hinblick auf ein Nahrungsergänzungspräparat selbst, ist die gestellte Aufgabe erfindungsgemäß durch die kennzeichnenden Merkmale des Patenanspruches 10 gelöst.

Eine entsprechende Verwendung ist im Patentanspruch 11 angegeben.

Der Kern der Erfindung ist, dass die in dem Nahrungsergänzungsprodukt eingebrachten Stoffe oder Wirkstoffe oder die Wirkstoffmixturen in einem Solventen gelöst oder dispergiert und mit Nanopartikeln vermischt werden, und dass das Gemisch, gegebenenfalls nach Auftrocknung, wieder pulverfein gemahlen wird. Damit soll erreicht werden, dass die Nahrungsergänzungswirkstoffe auf der Oberfläche der Nanopartikel anhaften. Mit Anhaften ist dabei gemeint, dass die Nanopartikel als solche und die entsprechenden aufgebrachten Wirkstoffschichten eine deutliche Vergrößerung der chemisch aktiven Oberfläche darstellen, über die dann die Verstoffwechselung entsprechend optimierbar ist. Durch die reine Physisorption der Nahrungsergänzungswirkstoffe auf den Nanopartikeln, im Gegensatz zu einer Chemiesorption, müssen diese aufgebrachten Nahrungsergänzungsschichten nicht in einer vorgegebenen oder vorzugebenden chemischen Reaktion abgelöst werden, sondern sie können mit jeder Form eines weiteren flüssigen Verdauungssaftes, der dann innerhalb des Körpers vorliegt abgelöst werden. Dass heißt, die entsprechenden Nahrungsergänzungsstoffe, Moleküle, oder Partikel derselben lösen sich in Magen- oder Dünndarmsaft wieder von den Nanopartikeln ab.

Aber auch hier gilt, dass die durch die Nanopartikelverwendung erzeugte Reaktionsoberfläche erheblich vergrößert ist, gegenüber der Tatsache der Verabreichung von Wirkstoffen in fester Form. So können die gewünschten Nahrungsergänzungswirkstoffe wegen der erhöhten Reaktionsoberfläche auch genau auf die gewünschte Verstoffwechselungsmenge appliziert werden. Dass heißt im Ergebnis, die verdauungsmäßige Aufnahme der Wirkstoffe und deren nachfolgende Verstoffwechselung in Menge und Wirkungsweise ist damit optimiert.

In weiterer vorteilhafter Ausgestaltung ist angegeben, dass das abschließende Mahlgut in Kapseln gefüllt wird. Auf diese Weise ist das Nahrungsergänzungsprodukt auf einfache Weise zusammen mit der Nahrungsaufnahme oder davor oder danach, also im Zusammenhang mit der Nahrung ebenso oral einnehmbar.

ln weiterer vorteilhafter Aufgestaltung ist angegeben, dass die Nanopartikel aus Siliziumdioxid oder Silikaten bestehen. Diese erheblich vorteilhafte Ausgestaltung gewährleistet, dass diese Stoffe körpergängig sind keinerlei chemische Wirkung hinterlassen, als nur die Bereitstellung der sozusagen verdauungskatalytischen Trägerpartikel auf denen dann die Wirkstoffe aufgebracht sind.

In weitere vorteilhafter Ausgestaltung ist angegeben, dass im Falle der Dispersion von Stoffen oder Wirkstoffen, die nicht lösbar und damit nicht molekular vorliegen, die Partikelgröße des Stoffes oder Wirkstoffes oder der Wirkstoffmixtur mechanisch derart fein gemahlen ist, dass sich Wirkstoffpartikel im Subnanobereich ergeben, die an den Nanopartikeln im Nanobereich anhaften. Für die nachfolgend noch näher erläuterten, im wesentlichen gewürzmäßigen Stoffe, kommt es nunmehr darauf an, dass, wenn dort Partikel enthalten sind, dass diese subnanofein gemahlen werden, so dass sich eine Vielzahl von solchen dann ergebenden, beispielsweise Gewürzpartikel, auf einem Träger-Nanopartikel aus Siliziumdioxid oder Silikat anhaften können. Auch hier ist gemeint, dass diese Partikel auch an ihrer Subnanooberfläche nicht eine Chemiesorption mit der Nanopartikeloberfläche eingehen, sondern lediglich eine Adsorption.

ln weiterer vorteilhafter Ausgestaltung ist angegeben, dass als Stoffe oder Wirkstoffe Zimt oder Zimtverbindungen, wie Zimtaldehyd verwendet werden und / oder Vanilleextrakt aus der natürlichen Vanilleschote oder Vanillin, oder Verbindungen damit, und / oder Senf.

In Bezug auf Senf sind im Wesentlichen auch deren Glykoside Sinigrin und / oder Sinalbin gemeint, die positive Auswirkungen auf den Stoffwechsel haben, und aus diesen Gründen Senf ohnehin als gesundes Nahrungsmittel gilt.

In weiterer vorteilhafter Ausgestaltung ist angegeben, dass der Solvent Wasser oder eine Wasser-Zucker-Lösung ist derart, dass die Wirkstoffe nach Konditionierung gemäß der Lehre aus Anspruch 1 in einer Saccharid- oder einer Polysaccharidmatrix vorliegen. Gemeint ist damit, dass sie nach Auftrocknung, dass heißt wenn sie auf der Nanopartikeloberfläche abgeschieden sind, dies in einer Saccharid oder Polysaccharidmatrix vorliegt. Dies hat zwei wesentliche Vorteile. Handelt es sich bei den Wirkstoffen um lösbare Moleküle oder Makromoleküle, so kann es nach Auftrocknung zu einer ungewollten Oxydation der selben kommen. Doch durch die Einbindung, quasi der Glykosierung in eine Saccharid- oder eine Polysaccharidmatrix, wird genau dies nach Auftrocknung verhindert, so dass der natürliche Wirkstoff weitestgehend unoxidiert vorliegt.

ln weiter Ausgestaltung ist es daher vorteilhaft, weitere antioxidative stabilisierende Komponenten mit einzubringen, und beispielsweise die Polysaccharidstrukturen aus einem Extrakt aus Ascophyllum nodosum oder anderen inhaltsstoffgleichen oder ähnlichen Algen als Polysaccharidquellen aus natürlichen Nahrungsmitteln darzustellen.

In weiter vorteilhafter Ausgestaltung ist angegeben, dass die Stoff- oder Wirkstoffmixtur auch Alginsäure aus Meeresalgen als Stabilisator enthält. Auch dies ist bei dem erfindungsgemäß genannten Verfahren von großem Vorteil. Besonders vorteilhaft ist nun in Gesamtschau schon die Kombination der Nanopartikel aus Siliziumdioxid oder Silikaten, in Verbindung mit den hier verwendeten Solventen und der glykosierten Verbindung der Wirkstoffe in einer Saccharid- oder Polysaccharidmatrix. Die Wirkstoffe liegen bei dieser Merkmalkombination somit physikalisch in einer geeigneten Partikel- oder Molekülkonstitution vor, so dass eine optimalere Resoption dieser Stoffe vom Körper ermöglicht ist und der nachfolgende Stoffwechsel dadurch optimiert ist.

In weiterer vorteilhafter Ausgestaltung ist angegeben, dass der oben genannten Mixtur auch noch übrige Vitamine und / oder Eiweiße und / oder Ballaststoffe und / oder andere Kohlenhydrate und / oder Mineralstoffe und / oder Spurenelemente aus Nahrungsmitteln mit beigefügt wird, um die insgesamte Resorption zu optimieren, und einen optimalen, nahrungsergänzenden Vitaminhaushalt wieder herzustellen.

In Bezug auf das Nahrungsergänzungsprodukt selbst ist Kern der Erfindung, dass die Stoffe oder Wirkstoffe oder die Wirkstoffmixtur direkt auf die Oberfläche der Nanopartikel aufgebracht sind, in der oben im Verfahren beschriebenen Weise.

Besonders Vorteilhaft ist die Verwendung genau solcher Nahrungsergänzungsprodukte oder Nahrungsergänzungsmittel im Aufbautraining von Sportlern, insbesondere von Kraftsportlern, aber auch bei solchen Personen, die erhöhter physischer Körperbeanspruchung ausgesetzt sind.

Die Erfindung ist in dem Ablauf ihrer Maßnahmen durch die Zeichnung dargestellt und nachfolgend in einem Ausführungsbeispiel beschrieben.

Es zeigt:

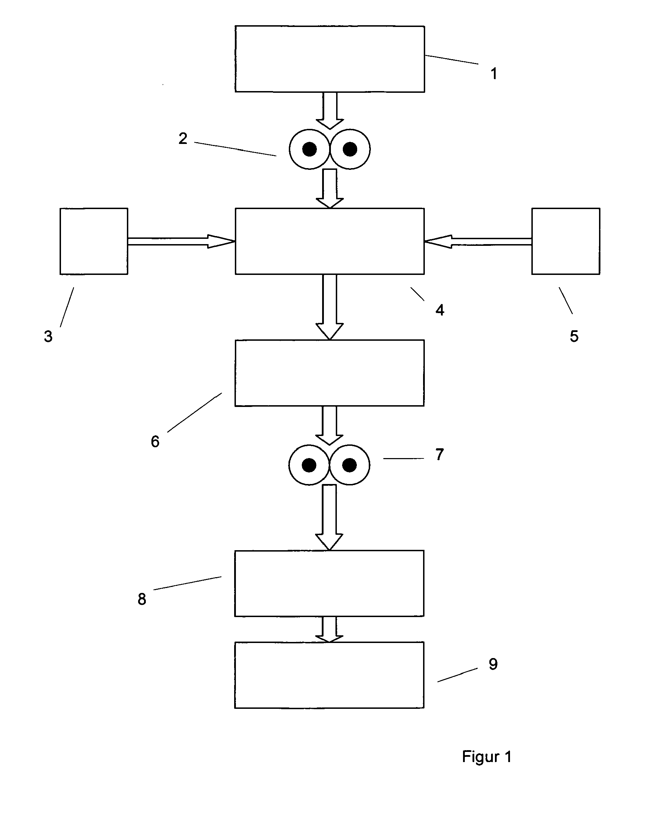

- Figur 1:: Schematischer Ablauf des Herstellverfahrens
- Figur 2:: Nano-Partikel mit Wirkstoff-Partikel im Sub-Nano-Bereich.

F zeigt lediglich den logischen Ablauf der Maßnahmen im erfindungsgemäßen Verfahren zur Herstellung eines Nahrungsergänzungsprodukte. Wichtig ist hierbei zu wissen, dass Nahrungsergänzungsprodukte in Verbindung mit Nanopartikeln nicht bekannt sind, weil bisher nicht deren positive Auswirkung auf die Resorption von Nahrungser-gänzungsmitteln erkannt wurde. Als Stoffe oder Wirkstoffe 1 in fester Form können Zimt, oder in pastöser oder aber auch in fester Form Senf vorliegen, oder eine der oben bereits genannten Inhaltsstoffe. Diese werden sodann in Subnanogröße gebracht, wozu eine erste Mahlstufe 2 verwendet wird. Für alle übrigen Wirkstoffe die in einem Solventen 5 auf Molekularbasis lösbar sind, entfällt diese Mahlstufe natürlich. Auf der anderen Seite ist es auch möglich, auch lösbare Vorprodukte, das heißt Stoffe zunächst vorzumahlen, um anschließend eine schnellere Lösung im verwendeten Solventen zu erreichen.

Sodann gelangt diese im Subnanobereich konditionierte Wirkstoffmixtur in einen Mischer 4. Dort sind also sodann entweder Subnanopartikel der Wirkstoffe vorhanden, oder aber diese liegen dort zunächst nur zum Lösen in einem Solventen vor. Unabhängig davon, ob es molekularlösbare Stoffe sind, oder Subnanopartikel bleiben, wird nun in den Mischer 4 die Zugabe der Nanopartikel vorgenommen. Dann ergibt die Zugabe des Solventen, um nun die Anhaftung der entweder lösbaren oder nur als Subnanopartikel vorliegende Wirkstoffe auf den Oberflächen der Nanopartikel vorzunehmen. Eine gute Durchmischung im Mischer 4 sorgt für eine Gleichverteilung von Stoff oder Wirkstoff und Nanopartikel.

Die Zugabe von Solventen kann dabei entweder Wasser oder Fette, Öle oder auch Essige etc. sein, die in einer Ausgestaltungsform dann auch Zucker beziehungsweise Saccharide oder Polysaccharide oder diesbezügliche Kohlenhydrate enthalten. Die Zugabe dieser Saccharide oder Polysaccharide bewirkt eine Oxidationshemmung der nun entweder molekular oder als Kleinstpartikel vorliegenden Stoffe oder Wirkstoffe. Damit wird die unerwünschte Oxidation, die Wirkstoffe unwirksam machen kann oder in ihrer Wirkung drastisch reduzieren kann, verhindert.

Des weiteren können auf weitere Stoffe wie Vitamine, Ballaststoffe, Eiweiße, Fette etc. beigegeben werden. In der nachfolgenden Trockenstufe 6 erfolgt wenn nötig, dass heißt wenn flüssige Bestandteile als Solventen mit beigefügt wurden, die Trocknung dieser Mischung. Am Ausgang des Trockners verlässt dieses Vorprodukt den selben dann wieder in Richtung einer zweiten Mahlstufe, bei denen das nun aufgetrocknete Vorprodukt wieder in die pulverfeine Mahlung im Nanobereich gemahlen wird.

Dieses weitere Vorprodukt liegt dann als vorkonditioniertes Pulver 8 vor, welches sodann lediglich nur noch in einer Verfüllung oder Verpressung 9 in Kapseln zugeführt wird. Somit liegt dort dann das Endprodukt vor. Bei einfacher oraler Einnahme gelangt diese Kapsel in den Verdauungstrakt, die Kapsel besteht dabei aus einem magensaft- und / oder dünndarmsaftlöslichen Material, so dass das Nahrungsergänzungsmittel nunmehr entweder in den Magen oder den Dünndarm der einnehmenden Person gelangt und dort in der gewünschten Weise dann in Verbindung mit den verwendeten Nanopartikel optimal vom Körper resorbiert werden kann. Diese optimierte Nährstoffaufnahme beziehungsweise Nahrungsergänzungsaufnahme verwertet die verwendeten Eingangsstoffe optimal und die Resorption erfolgt schnell und zielgerichtet, so dass die Nahrungsergänzung hier eine gezielte Wirkung für den genannten Wirkungszweck hat, nämlich zur Unterstützung sportlerisch oder körperlich anstrengender Tätigkeit, und dabei die Wirkstoffe physiologisch optimiert im Körper anzubieten.

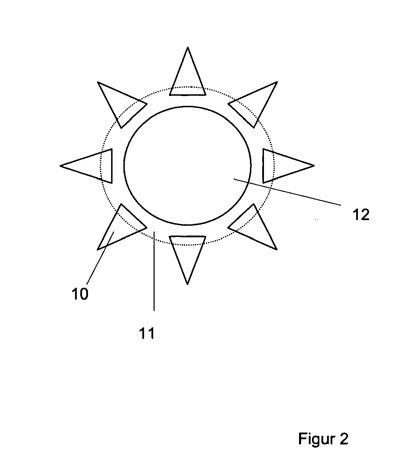

Figur 2 zeigt eine vergrößerte Darstellung eines einzelnen Nanopartikels 12, welches hier als Trägerpartikel verwendet wird, auf dem die Wirkstoffe 10 aufgebracht werden. In diesem Beispiel ist dargestellt, dass die Wirkstoffe als kleine Partikel vorliegen. Nur zur besseren Deutlichmachung sind diese als Dreiecke dargestellt. Sind also die aufzubringenden Wirkstoffe nicht in einen geeigneten Solventen lösbar, wie z.B. einige Gewürze, so werden diese so fein gemahlen, dass diese bezüglich ihrer Abmessungen im Sub-Nanobereich vorliegen, und somit auch größenmäßig auf der Oberfläche des Nano-(Träger)-Partikels aufbringbar sind.

Die Adsorptive Anhaftung kann durch einen Film 11 einer aufgetrockneten Saccarid- oder Polysaccharid-Lösung erfolgen.

Für den Fall, dass die Wirkstoffe in einem Solventen lösbar sind, sind auf der Oberfläche des Nano-(Träger)-Partikels keine Wirkstoffpartikel mehr, sondern die Wirkstoffe liegen in dem Film 11 in molekularer Form vor.

Die Saccharid- oder Polysaccharid-Lösung hat in diesem Fall dann so gleich zwei Aufgaben. Die erste ist die gute, aber im Magensaft oder Dünndarmsaft gut lösbare Anhaftung, und die zweite ist, dass der aufgetrocknete Film die Wirkstoffe nicht nur enthält, sondern die Wirkstoffe in der Saccharid- oder Polysaccharidmatrix auf der Oberfläche des Nanopartikels vor Oxidation schützt.

### Bezugszeichen:

- 1: Stoff oder Wirkstoff in fester Form
- 2: erste Mahlstufe
- 3: Nanopartikelzugabe
- 4: Mischer
- 5: Zugabe von Solventen
- 6: Trockner
- 7: zweite Mahlstufe
- 8: konditioniertes Pulver
- 9: Verfüllung oder Verpressung in Kapseln
- 10: Wirkstoff-Partikel im Sub-Nano-Bereich
- 11: Film bspw aus Saccharid oder Polysaccarid und/oder Stabilisator und Wirkstoff-Partikeln 10
- 12: Nano-Partikel

## Patentansprüche

1. Verfahren zur Herstellung eines diätetischen Lebens- oder Nahrungsmittelergänzungsproduktes, mit einer natürlichen lebensmittelmäßigen Stoff- oder Wirkstoffmixtur,
**dadurch gekennzeichnet,**
**dass** die Stoffe oder Wirkstoffe oder die Wirkstoffmixtur in einem Solventen gelöst oder dispergiert und mit Nanopartikeln vermischt werden, und dass das Gemisch nach Auftrocknung wieder pulverfein gemahlen wird.

2. Verfahren nach Anspruch 1,
**dadurch gekennzeichnet,**
**dass** das abschließende Mahlgut in Kapseln gefüllt wird.

3. Verfahren nach Anspruch 1,
**dadurch gekennzeichnet,**
**dass** die Nanopartikel aus Siliziumdioxid oder Silikaten bestehen.

4. Verfahren nach Anspruch 1, 2 oder 3,
**dadurch gekennzeichnet,**
**dass** im Falle der Dispersion oder Lösung von Stoffen oder Wirkstoffen oder Wirkstoffmixturen in einem Solventen dies derart erfolgt, dass die Partikelgröße des Stoffes oder Wirkstoffes, oder der Wirkstoffmixtur mechanisch derart fein gemahlen wird, dass sich Wirkstoffpartikel im SUB-Nanobereich ergeben, die an den Nanopartikeln im Nanobereich anhaften.

5. Verfahren nach einem der vorhergehenden Ansprüche,
**dadurch gekennzeichnet,**
**dass** als Stoffe oder Wirkstoffe
- Zimt, oder Zimtverbindungen, wie Zimtaldehyld,
und / oder
- Senf oder deren Glykoside Sinigrin und / oder Senalbin,
und / oder
- das Mark der Vanille oder Vanillin oder Vanillinverbindungen,
verwendet werden, die in entsprechender Weise gelöst und / oder dispergiert auf die Nanopartikel aufgebracht werden.

6. Verfahren nach einem der vorhergehenden Ansprüche,
**dadurch gekennzeichnet,**
**dass** der Solvent Wasser oder eine Wasser-Zucker-Lösung ist, derart, dass die Wirkstoffe in einer Saccharid- oder einer Polysaccharidmatrix vorliegen.

7. Verfahren nach einem der vorhergehenden Ansprüche,
**dadurch gekennzeichnet,**
**dass** die Stoff- oder Wirkstoff-Mixtur Alginsäure aus Meeresalgen als Stabilisator enthält.

8. Verfahren nach Anspruch 7,
**dadurch gekennzeichnet,**
**dass** die Mixtur ein Extrakt aus Ascophyllum nodosum oder inhaltstofflich gleichen oder ähnlichen Algen oder Polysaccharidquellen aus natürlichen Nahrungsmitteln enthält.

9. Verfahren nach einem der vorhergehenden Ansprüche,
**dadurch gekennzeichnet,**
**dass** der Mixtur Vitamine, und / oder Eiweiße, und / oder Ballaststoffe und / oder Mineralstoffe und / oder Spurenelemente zugegeben werden.

10. Stoff- oder Wirkstoff oder Wirkstoffmixtur zur Lebensmittel- oder Nahrungsergänzung,
**dadurch gekennzeichnet,**
**dass** die Stoffe oder Wirkstoffe oder die Wirkstoffmixtur in einem Solventen gelöst oder dispergiert, und / oder direkt auf die Oberfläche von Nanopartikeln aufgebracht sind.

11. Stoff- oder Wirkstoff oder Wirkstoffmixtur zur Lebensmittel- oder Nahrungsergänzung nach Anspruch 10,
**dadurch gekennzeichnet,**
die Nanopartikel aus Siliziumdioxid oder Silikat bestehen.

12. Stoff- oder Wirkstoff oder Wirkstoffmixtur zur Lebensmittel- oder Nahrungsergänzung nach Anspruch 10 oder 11,
**dadurch gekennzeichnet,**
die im Falle der Dispersion oder Lösung von Stoffen oder Wirkstoffen oder Wirkstoffmixturen in einem Solventen die Wirkstoffpartikel im SUB-Nanobereich vorliegen und an den Nanopartikeln im Nanobereich anhaften.

13. Stoff- oder Wirkstoff oder Wirkstoffmixtur zur Lebensmittel- oder Nahrungsergänzung nach einem der Ansprüche 10 bis 12,
**dadurch gekennzeichnet,**
**dass** die Wirkstoffe in einer Saccharid- oder Polysaccharidmatrix auf der Oberfläche der Nanopartikel vorliegen.

14. Stoff- oder Wirkstoff oder Wirkstoffmixtur zur Lebensmittel- oder Nahrungsergänzung nach einem der Ansprüche 10 bis 13,
**dadurch gekennzeichnet,**
**dass** die Stoffe oder Wirkstoffe
- Zimt, oder Zimtverbindungen, wie Zimtaldehyld,
und / oder
- Senf oder deren Glykoside Sinigrin und / oder Senalbin,
und / oder
- das Mark der Vanille oder Vanillin oder Vanillinverbindungen und/oder
- Alginsäure als Stabilisator
und/oder
- ein Extrakt aus Ascophyllum nodosum oder inhaltstofflich gleichen oder ähnlichen Algen oder Polysaccharidquellen aus natürlichen Nahrungsmitteln sind

15. Verwendung des Stoffes nach einem der Ansprüche 10 bis 14, hergestellt nach dem Verfahren nach einem der Ansprüche 1 ― 9, zur Verabreichung von Lebensmittel- oder Nahrungsmittelergänzung, insbesondere für Sportler, zur Unterstützung des kraft- und muskelaufbauenden Trainings.
